(19) Europäisches Patentamt
European Patent Office
Office européen des brevets

(11) **EP 2 518 123 A1**

(12) **EUROPEAN PATENT APPLICATION**

(43) Date of publication:
**31.10.2012 Bulletin 2012/44**

(51) Int Cl.:
*C09J 133/06* (2006.01)     *C09J 7/02* (2006.01)

(21) Application number: **12165881.9**

(22) Date of filing: **27.04.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.04.2011 JP 2011099841**

(71) Applicant: **NITTO DENKO CORPORATION Osaka (JP)**

(72) Inventors:
• **Suzuki, Takashi**
  **Ibaraki-shi, Osaka (JP)**
• **Kishioka, Hiroaki**
  **Ibaraki-shi, Osaka (JP)**
• **Natsui, Masatomo**
  **Ibaraki-shi, Osaka (JP)**

(74) Representative: **Grünecker, Kinkeldey, Stockmair & Schwanhäusser**
  **Leopoldstrasse 4**
  **80802 München (DE)**

(54) **Pressure-sensitive adhesive composition and pressure-sensitive adhesive sheet**

(57)     The present invention provides a pressure-sensitive adhesive composition excellent in the anti-foaming release property and high-temperature stress relaxation property, and a pressure-sensitive adhesive layer composed of the pressure-sensitive adhesive composition. The invention relates to a pressure-sensitive adhesive composition including an acrylic polymer which is formed from a monomer component including methyl methacrylate and has a glass transition temperature (Tg) of -40°C or more, wherein the pressure-sensitive adhesive composition has a shear storage elastic modulus at 85°C as measured by a dynamic viscoelasticity measurement of from $1 \times 10^4$ to $3 \times 10^5$ Pa.

FIG. 1

30mm
11
12
100mm
13
10mm

EP 2 518 123 A1

**Description**

BACKGROUND OF THE INVENTION

Technical Field

The present invention relates to a pressure-sensitive adhesive composition and a pressure-sensitive adhesive sheet. More specifically, the present invention relates to a pressure-sensitive adhesive composition and a pressure-sensitive adhesive sheet each having excellent anti-foaming property and excellent high-temperature stress relaxation property.

Background Art

Recently, a display device such as liquid crystal display (LCD), and an input device used in combination with the display device, such as touch panel, have been widely used in various fields. In the production or the like of such a display device or input device, a pressure-sensitive adhesive sheet (pressure-sensitive adhesive tape) is used for laminating together optical members. For example, in the production of a touch panel, a transparent pressure-sensitive adhesive sheet is used (see, for example, Patent Documents 1 to 3). Among others, the pressure-sensitive adhesive sheet used to laminate, for example, a cover lens, a transparent electrode film or other members constituting a touch panel has been required to have excellent adhesion reliability such as property of not causing foaming or release (anti-foaming release property) at a high temperature, in addition to high transparency.

As the cover lens that is one of constituent members of a touch panel, a transparent plastic substrate having a hard coat layer formed on the surface thereof, specifically a plastic substrate made of polymethyl methacrylate (PMMA) or polycarbonate (PC), which is subjected to a hardcoat treatment, has been heretofore used. However, in recent years, for the purpose of reducing the production cost, a plastic substrate without the hard coat layer has been used as a cover lens.

In this connection, when the cover lens (plastic substrate without a hardcoat layer) and other members are laminated by using a conventional pressure-sensitive adhesive sheet, there arises a problem that the lack of a hardcoat layer readily allows water, impurities or the like in the cover lens to transfer into the pressure-sensitive adhesive sheet and the water or the like causes foaming or release under high-temperature conditions. Therefore, higher anti-foaming release property is required for the pressure-sensitive adhesive sheet used for lamination to such a cover lens.

Furthermore, a laminate obtained by laminating the cover lens and other members has caused a problem that warpage or distortion occurs in the laminate under high-temperature conditions due to a stress generated when the cover lens differs in the linear expansion coefficient from other members. Therefore, the pressure-sensitive adhesive sheet used in such an application is required to have characteristics capable of relaxing the stress giving rise to warpage or distortion (sometimes referred to as "high-temperature stress relaxation property"), in addition to anti-foaming release property.

Also, in the case of laminating the pressure-sensitive adhesive sheet to a metal thin film (including a metal oxide thin film) such as transparent electrode film, characteristics of not corroding the metal thin film (sometimes referred to as "corrosion resistance") are also required.

| | |
|---|---|
| Patent Document 1: | JP 2003-238915 A |
| Patent Document 2: | JP 2003-342542 A |
| Patent Document 3: | JP 2004-231723 A |

SUMMARY OF THE INVENTION

Accordingly, the present invention has been made in an effort to provide a pressure-sensitive adhesive composition and a pressure-sensitive adhesive sheet each having excellent anti-foaming release property and high-temperature stress relaxation property. In addition, the present invention has been made in an effort to provide a pressure-sensitive adhesive composition and a pressure-sensitive adhesive sheet each having excellent corrosion resistance.

As a result of intensive studies, the present inventors have found that when a pressure-sensitive adhesive composition is formed using, as an essential component, an acrylic polymer which is formed from a monomer component including a specific monomer and has a specific glass transition temperature, and is controlled to have a shear storage elastic modulus at 85°C in a specific range as measured by dynamic viscoelasticity measurement, a pressure-sensitive adhesive composition excellent in both anti-foaming release property and high-temperature stress relaxation property can be obtained. The present invention has been accomplished based on this finding.

That is, the present invention provides a pressure-sensitive adhesive composition, including an acrylic polymer which is formed from a monomer component including methyl methacrylate and has a glass transition temperature (Tg) of -40°C or more, wherein the pressure-sensitive adhesive composition has a shear storage elastic modulus at 85°C as measured by a dynamic viscoelasticity measurement of from $1 \times 10^4$ to $3 \times 10^5$ Pa.

In the pressure-sensitive adhesive composition, a content of the methyl methacrylate is preferably 1 to 30 wt% based on a total amount (100 wt%) of the monomer component forming the acrylic polymer.

The pressure-sensitive adhesive composition preferably has a gel fraction of from 40 to 95%.

In the pressure-sensitive adhesive composition, a content of the acrylic polymer is preferably 65 wt% or more based on the pressure-sensitive adhesive composition (100 wt%).

In the pressure-sensitive adhesive composition, it is preferred that the monomer component forming the acrylic polymer does not substantially include a carboxyl group-containing monomer.

In the pressure-sensitive adhesive composition, the monomer component forming the acrylic polymer preferably includes a polar group-containing monomer in an amount of 0.5 to 20 wt% based on a total amount (100 wt%) of the monomer component forming the acrylic polymer.

The pressure-sensitive adhesive composition is preferably formed from a solution for forming the pressure-sensitive adhesive composition, the solution including the acrylic polymer and a crosslinking agent, wherein a content of the crosslinking agent is from 0.05 to 1 part by weight per 100 parts by weight of the acrylic polymer.

The present invention also provides a pressure-sensitive adhesive sheet, including a pressure-sensitive adhesive layer composed of the pressure-sensitive adhesive composition.

The present invention also provides a pressure-sensitive adhesive sheet, including a pressure-sensitive adhesive layer composed of the pressure-sensitive adhesive composition, which is used in an application on an electrostatic capacity type touch panel.

The present invention also provides a pressure-sensitive adhesive sheet, including a pressure-sensitive adhesive layer composed of the pressure-sensitive adhesive composition, which is used for lamination to a metal thin film.

In the pressure-sensitive adhesive sheet, a thickness of the pressure-sensitive adhesive layer is preferably from 10 to 250 $\mu$m.

The pressure-sensitive adhesive composition of the present invention has the configurations and therefore, is excellent in the anti-foaming release property as well as in the high-temperature stress relaxation property. Therefore, when the pressure-sensitive adhesive composition of the present invention is used for laminating optical members or the like, floating or release from an adherend under high-temperature conditions can be prevented or suppressed. Particularly, in the case where the adherend is a cover lens composed of a PMMA- or PC-made plastic substrate without a hardcoat layer, high anti-foaming release property is exerted. As for the laminate obtained by laminating optical members or the like (in particular, a laminate of the cover lens and other members) through the pressure-sensitive adhesive composition of the present invention, even when the members differ in the linear expansion coefficient from each other, the stress generated is successfully relaxed and therefore, warpage or distortion is not generated in the laminate under high-temperature conditions. Accordingly, the pressure-sensitive adhesive composition of the present invention is suitably used in an application requiring both anti-foaming release property and high-temperature stress relaxation property at a high level and can be suitably used, for example, in an application on a electrostatic capacity type touch panel (particularly, for lamination to a cover lens). Also, in the case where the acrylic polymer in the pressure-sensitive adhesive composition of the present invention is formed from the monomer components which do not substantially include a carboxyl group-containing monomer, even when laminated to a metal thin film (including a metal oxide thin film), the pressure-sensitive adhesive composition of the present invention does not cause corrosion of the metal thin film and therefore, can be suitably used for lamination or the like to a metal thin film such as ITO (indium tin oxide) formed on the surface of a transparent conductive film. In this case, the pressure-sensitive adhesive composition of the present invention can be suitably used for both of lamination to a cover lens and laination to a transparent electrode film during the production of a electrostatic capacity type touch panel and thus has high versatility, and this is preferred from the standpoint of enhancing the productivity.

BRIEF DESCRIPTION OF THE DRAWINGS

FIG. 1 is a schematic view (perspective view) showing the positional relationship among a test plate, a pressure-sensitive adhesive sheet and a weight in a constant-load peel test.

FIG. 2 is a schematic view (side view) showing the positional relationship among a test plate, a pressure-sensitive adhesive sheet and a weight at the start of measurement in a constant-load peel test.

FIG. 3 is a schematic view (side view) showing the peeled state and peeling distance of a pressure-sensitive adhesive sheet after the passage of 6 hours from the start of measurement in a constant-load peel test.

DETAILED DESCRIPTION OF THE INVENTION

The pressure-sensitive adhesive composition of the present invention is a pressure-sensitive adhesive composition formed from the later-described acrylic polymer (an acrylic polymer formed from a monomer component containing methyl methacrylate and having a glass transition temperature (Tg) of -40°C or more). Although this is not particularly limited, the pressure-sensitive adhesive composition of the present invention is formed from a solution (solution for forming the pressure-sensitive adhesive composition) containing the acrylic polymer as an essential component or formed from a solution (solution for forming the pressure-sensitive adhesive composition) containing, as an essential component, a mixture of monomers (sometimes referred to as a "monomer mixture") forming the acrylic polymer, or a partial polymerization product thereof. The term "monomer mixture" as used herein means a mixture consisting of only monomer components forming the acrylic polymer. Also, the term "partial polymerization product" as used herein means a composition where one component or two or more components out of constituent components of the monomer mixture are partially polymerized.

Above all, the pressure-sensitive adhesive composition of the present invention is preferably formed from a solution for forming the pressure-sensitive adhesive composition containing the acrylic polymer as an essential component. The solution for forming the pressure-sensitive adhesive composition may contain, if desired, other components (such as additive), in addition to the acrylic polymer. The content of the acrylic polymer in the solution for forming the pressure-sensitive adhesive composition is not particularly limited but is preferably 65 wt% or more (for example, from 65 to 100 wt%), more preferably from 70 to 99.999 wt%, based on the solid matter (100 wt%) of the solution for forming the pressure-sensitive adhesive composition. That is, the content of the acrylic polymer in the pressure-sensitive adhesive composition of the present invention is, in view of pressure-sensitive adhesive characteristics, preferably 65 wt% or more (for example, from 65 to 100 wt%), more preferably from 70 to 99.999 wt%, based on the pressure-sensitive adhesive composition (100 wt%).

[Acrylic polymer]

The acrylic polymer in the pressure-sensitive adhesive composition of the present invention is a polymer formed from the monomer component including methyl methacrylate as an essential monomer component. By virtue of using methyl methacrylate as the monomer component forming the acrylic polymer, the pressure-sensitive adhesive property at a high temperature is enhanced and among others, on an adherend made of polymethyl methacrylate (PMMA) or polycarbonate (PC), remarkably excellent pressure-sensitive adhesive property can be brought out. Accordingly, the pressure-sensitive adhesive composition of the present invention exerts high anti-foaming release property when the adherend is a cover lens composed of PMMA or PC.

The content of methyl methacrylate is preferably from 1 to 30 wt%, more preferably from 5 to 25 wt%, still more preferably from 5 to 20 wt%, yet still more preferably from 10 to 20 wt%, based on the total amount (100 wt%) of the monomer components forming the acrylic polymer. If the content of methyl methacrylate is less than 1 wt%, the pressure-sensitive adhesive property at a high temperature may be reduced to impair anti-foaming release property particularly on a PMMA- or PC-made adherend. On the other hand, if the content of methyl methacrylate exceeds 30 wt%, the pressure-sensitive adhesive composition may become excessively hard, giving rise to reduction in the pressure-sensitive adhesive property.

As for the monomer component forming the acrylic polymer, a (meth)acrylic acid alkyl ester having a linear or branched alkyl group with a carbon number of 2 to 12 (hereinafter, sometimes referred to as a "(meth)acrylic acid $C_{2-12}$ alkyl ester") is preferably contained as a main monomer component. In this connection, the "(meth)acryl" means "acryl" and/or "methacryl", and in the following, the same applies.

Examples of the (meth)acrylic acid $C_{2-12}$ alkyl ester include ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. Among these, n-butyl acrylate (BA), ethyl acrylate (EA), and 2-ethylhexyl acrylate (2EHA) are preferred. The (meth)acrylic acid $C_{2-12}$ alkyl esters may be used alone or in combination of two or more thereof.

From the standpoint of adjusting the adhesion property and shear storage elastic modulus, the content of the (meth)acrylic acid $C_{2-12}$ alkyl ester is preferably from 10 to 85 wt%, more preferably from 20 to 80 wt%, still more preferably from 40 to 80 wt%, based on the total amount (100 wt%) of the monomer components forming the acrylic polymer.

Also, as for the monomer component forming the acrylic polymer, a (meth)acrylic acid alkoxyalkyl ester is preferably contained. In the case of containing the (meth)acrylic acid alkoxyalkyl ester as a monomer component, adhesion property is advantageously enhanced.

As the alkoxyalkyl ester (meth)acrylate (alkoxyalkyl (meth)acrylate), examples thereof include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate and 4-ethoxybutyl (meth)acrylate. Among them, alkoxyalkyl ester acrylate is preferable, and 2-methoxyethylacrylate (2MEA) is more preferable. The alkoxyalkyl ester (meth) arylate may be used alone or in combination of two or more thereof.

The content of the (meth)acrylic acid alkoxyalkyl ester is, in view of adhesion property, preferably from 0 to 85 wt%, more preferably from 20 to 70 wt%, still more preferably from 40 to 70 wt%, based on the total amount (100 wt%) of the monomer components forming the acrylic polymer.

Furthermore, as for the monomer component forming the acrylic polymer, a polar group-containing monomer is preferably contained. Containing the polar group-containing monomer as a monomer component is preferred because in this case, for example, the adhesive force can be enhanced or the cohesive force of the pressure-sensitive adhesive composition can be increased.

As the polar group-containing monomer, examples thereof include a hydroxyl group-containing monomer such as a hydroxyalkyl (meth)acrylate including 2-hydroxyethyl (meth)acrylate, 3-hydroxypropyl (meth)acrylate, 4-hydroxybutyl (meth)acrylate and 6-hydroxyhexyl (meth)acrylate, vinyl alcohol and allyl alcohol; an amide group-containing monomer such as (meth)acrylamide, N,N-dimethyl (meth)acrylamide, N-methylol (meth)acrylamide, N-methoxymethyl (meth) acrylamide, N-butoxymethyl (meth)acrylamide, and N-hydroxyethyl acrylamide; an amino group-containing monomer such as aminoethyl (meth)acrylate, dimethylaminoethyl (meth)acrylate and t-butylaminoethyl (meth)acrylate; an epoxy group-containing monomer such as glycidyl (meth)acrylate and methyl glycidyl (meth)acrylate; a cyano group-containing monomer such as acrylonitrile and methacrylonitrile; a hetero ring-containing vinyl monomer such as N-vinyl-2-pyrrolidone, N-(meth)acryloylmorpholine, vinylpyridine, N-vinylpiperidone, vinylpyrimidine, N-vinylpiperazine, N-vinylpyrrole, N-vinylimidazole and vinyloxazole; a sulfonate group-containing monomer such as sodium vinylsulfonate; a phosphate group-containing monomer such as 2-hydroxyethylacryloyl phosphate; an imide group-containing monomer such as cyclohexylmaleimide and isopropylmaleimide; and an isocyanate group-containing monomer such as 2-methacryloyloxyethyl isocyanate. Among them, from the standpoint of the improvement of the adhesion properties and the effective crosslinking by increasing the crosslinked point to improve the heat resistance, the hydroxyl-group containing monomer is preferable. In addition, from the standpoint of the high crosslinking rate and the advantage in productivity, 2-hydroxyethyl (2HEA) and 4-hydroxybutyl acrylate (4HBA) are more preferable. The polar group-containing monomer may be used alone or in combination of two or more thereof.

The content of the polar group-containing monomer is preferably from 0.5 to 20 wt%, more preferably from 1 to 15 wt%, still more preferably from 1 to 13 wt%, based on the total amount (100 wt%) of the monomer components forming the acrylic polymer. If the content exceeds 20 wt%, for example, excessively dense crosslinking may result or the wet-heat resistance may be deteriorated (for example, foaming or release is readily caused under high-temperature or high-humidity conditions). Also, if the content is less than 0.5 wt%, the adhesion property may be reduced or the crosslinking reaction may proceed at an extremely low rate or may proceed insufficiently, as a result, the anti-foaming release property may be impaired.

As for the monomer component forming the acrylic polymer, a polyfunctional monomer or other copolymerizable monomer may be also contained as a copolymerization monomer component, in addition to the methyl methacrylate, (meth)acrylic acid $C_{2-12}$ alkyl ester, (meth)acrylic acid alkoxyalkyl ester and polar group-containing monomer.

As the polyfunctional monomer, examples thereof include hexanediol di(meth)acrylate, butanediol di(meth) acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxyacrylate, polyester acrylate and urethane acrylate. The polyfunctional monomer may be used alone or in combination of two or more thereof.

The content of the polyfunctional monomer is preferably 0.5 wt% or less (for example, from 0 to 0.5 wt%), more preferably from 0 to 0.1 wt%, based on the total amount (100 wt%) of the monomer components forming the acrylic polymer. If the content exceeds 0.5 wt%, the cohesive force may become excessively high to reduce the pressure-sensitive adhesive property. In the case of using a crosslinking agent, the polyfunctional monomer may not be used, but in the case of not using a crosslinking agent, the content of the polyfunctional monomer is preferably from 0.001 to 0.5 wt%, more preferably from 0.002 to 0.1 wt%.

Examples of other copolymerizable monomers include methyl acrylate; a (meth)acrylic acid $C_{13-20}$ alkyl ester such as tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate; a non-aromatic ring-containing (meth)acrylic acid ester such as (meth)acrylic acid cycloalkyl ester [e.g., cyclohexyl (meth)acrylate] and isobornyl (meth)acrylate; an aromatic ring-containing (meth)acrylic acid ester such as (meth)acrylic acid aryl ester [e.g.,

phenyl (meth)acrylate], (meth)acrylic acid aryloxyalkyl ester [e.g., phenoxyethyl (meth)acrylate] and (meth)acrylic acid arylalkyl ester [e.g., (meth)acrylic acid benzyl ester]; a vinyl ester-based monomer such as vinyl acetate and vinyl propionate; an olefin-based monomer such as ethylene, propylene, isoprene and butadiene; and a vinyl ether-based monomer such as vinyl ether.

From the standpoint of enhancing the stress relaxation property of the pressure-sensitive adhesive composition, the content of the carboxyl group-containing monomer in the monomer components forming the acrylic polymer is preferably reduced. If the content of the carboxyl group-containing monomer is large, the stress relaxation property of the pressure-sensitive adhesive composition may be reduced. Specifically, in the case where the content of the carboxyl group-containing monomer is 2 wt% or more based on the total amount (100 wt%) of the monomer components forming the acrylic polymer, a laminate obtained, for example, by laminating two members through the pressure-sensitive adhesive composition tends to readily cause warpage at a high temperature.

Also, in order to bring out excellent corrosion resistance to a metal thin film, it is preferred to substantially not include a carboxyl group-containing monomer in the monomer components forming the acrylic polymer. That is, the pressure-sensitive adhesive composition of the present invention is preferably a pressure-sensitive adhesive composition including an acrylic polymer formed from monomer components which do not substantially include a carboxyl group-containing monomer. In this case, as described above, the pressure-sensitive adhesive composition of the present invention is excellent in high anti-foaming release property and high-temperature stress relaxation property and therefore, can be suitably used, for example, for lamination to a cover lens of a touch panel. Furthermore, the pressure-sensitive adhesive composition is excellent also in the corrosion resistance and therefore, can be suitably used, for example, for lamination to a metal thin film such as ITO of a transparent electrode film. On this account, particularly during the production of a electrostatic capacity type touch panel, the pressure-sensitive adhesive composition of the present invention can be also used for both of lamination to a cover lens and lamination to a transparent electrode film and thus has high versatility, and this is preferred from the standpoint of enhancing the productivity.

Incidentally, the expression "substantially not contain/include" indicates that the monomer is not actively blended apart from its unavoidable mixing. Specifically, the content of the carboxyl group-containing monomer is preferably less than 1 wt%, more preferably less than 0.1 wt%, based on the total amount (100 wt%) of the monomer components forming the acrylic polymer. In the case where a carboxyl group-containing monomer is contained in the monomer components, for example, when directly laminated to a metal thin film such as ITO, the metal thin film may be corroded in a high-temperature or high-humidity environment to cause an increase in the resistance value. Examples of the carboxyl group-containing monomer include (meth)acrylic acid, itaconic acid, maleic acid, fumaric acid, crotonic acid and an isocrotonic acid. Also, this carboxyl group-containing monomer encompasses an acid anhydride of the carboxyl group-containing monomer (for example, an acid anhydride-containing monomer such as maleic anhydride and itaconic anhydride).

The acrylic polymer can be prepared by polymerizing the monomer components using a known/general polymerization method. As the polymerization method of the acrylic polymer, examples thereof include a solution polymerization method, an emulsion polymerization method, a bulk polymerization method and a polymerization method by an active energy-ray irradiation (active energy-ray polymerization method). Among them, the solution polymerization method and the active energy-ray polymerization method are preferable, and the solution polymerization is more preferable, from the standpoint of transparency, water resistance and cost.

As the polymerization initiator used when the acrylic polymer is polymerized, examples thereof include an azo initiator, a peroxide polymerization initiator (for example, dibenzoyl peroxide and tert-butyl permaleate) and a redox polymerization initiator. Among the initiators, the azo initiator disclosed in JP 2002-69411 A is particularly preferable. The azo initiator is preferable, since the decomposed product of the initiator hardly remains in the acrylic polymer as a part which causes a gas generated by heat (outgas). As the azo initiator, examples thereof include 2,2'-azobisisobutyronitrile (hereinafter, referred to as AIBN in some cases), 2,2'-azobis-2-methylbutyronitrile (hereinafter, referred to as AMBN in some cases), dimethyl 2,2'-azobis(2-methylpropionate) and 4,4'-azobis-4-cyanovaleric acid. The content of the azo initiator used is preferably 0.05 to 0.5 parts by weight, and more preferably 0.1 to 0.3 parts by weight based on the total amount (100 parts by weight) of the monomer components forming the acrylic polymer.

In the solution polymerization, various kinds of general solvents can be used. Examples of such a solvent include organic solvents such as: esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methylethylketone and methylisobutylketone. The solvents may be used either alone or in combination of two or more thereof.

The weight average molecular weight of the acrylic polymer is preferably from 500,000 to 1,200,000, more preferably from 600,000 to 1,100,000, still more preferably from 600,000 to 1,000,000. If the weight average molecular weight of the acrylic polymer is less than 500,000, good pressure-sensitive adhesive characteristics cannot be exerted, and the anti-foaming release property may be impaired. On the other hand, if the weight average molecular weight exceeds 1,200,000, there may arise a problem in the coatability. The weight average molecular weight can be controlled, for example, by the kind or amount used of the polymerization initiator, the temperature, time or the like during the polymerization, the monomer concentration, or the monomer dropping rate.

In the present invention, the weight average molecular weight (Mw) of the acrylic polymer can be measured by gel permeation chromatography (GPC). More specifically, the weight average molecular weight can be measured by using a GPC measuring apparatus, trade name "HLC-8120GPC", manufactured by Tosoh Corporation under the following GPC measurement conditions and determined in terms of polystyrene.

GPC Measurement Conditions:

Sample concentration: 0.2 wt% (tetrahydrofuran solution)
Sample injection: 10 $\mu$l
Eluent: tetrahydrofuran (THF)
Flow rate (flow velocity): 0.6 mL/min
Column temperature (measurement temperature): 40°C
Column: trade name "TSKgel Super HM-H/H4000/H3000/H2000 (manufactured by Tosoh Corporation)
Detector: Refractive Index (RI)

From the standpoint of developing heat resistance (anti-foaming release property) at a high temperature, the glass transition temperature (Tg) of the acrylic polymer is -40°C or more (for example, from -40 to -20°C), preferably from -35 to -25°C, more preferably from -33 to -28°C. If the glass transition temperature is less than -40°C, the pressure-sensitive adhesive property at a high temperature may be reduced and in turn, the anti-foaming release property may be impaired. On the other hand, if the glass transition temperature is as high as exceeding -20°C, the pressure-sensitive adhesive composition may become excessively hard to cause reduction in the pressure-sensitive adhesive property or reduction in the stress relaxation property. The glass transition temperature of the acrylic polymer can be controlled by the content of methyl methacrylate or the kind or content of other monomers forming the acrylic polymer.

The glass transition temperature (Tg) of the acrylic polymer is a glass transition temperature (theoretical value) represented by the following equation.

$$1/\text{Tg} = W_1/\text{Tg}_1 + W_2/\text{Tg}_2 + \ldots + W_n/\text{Tg}_n$$

In the above equation, Tg represents a glass transition temperature (unit: K) of the acrylic polymer, $\text{Tg}_i$ represents a glass transition temperature (unit: K) when a monomer i forms a homopolymer, and $W_i$ represents a weight fraction of the monomer i (i = 1, 2, ..., n) in the entire monomer components. The equation is used when the acrylic polymer is configured by n kinds of monomer components such as monomer 1, monomer 2, ..., monomer n.

[Solution for forming the pressure-sensitive adhesive composition]

The solution for forming the pressure-sensitive adhesive composition of the present invention preferably contains a crosslinking agent, in addition to the acrylic polymer. That is, the pressure-sensitive adhesive composition of the present invention is preferably formed from a pressure-sensitive adhesive composition solution containing the acrylic polymer and the crosslinking agent. By containing the crosslinking agent, the acrylic polymer can be crosslinked and the cohesive force of the pressure-sensitive adhesive composition can be more increased. In addition, the gel fraction of the pressure-sensitive adhesive composition or the weight average molecular weight of the sol content in the pressure-sensitive adhesive composition can be also adjusted.

As the crosslinking agent, examples thereof inclulde an isocyanate-based crosslinking agent, an epoxy-based crosslinking agent, a melamine-based crosslinking agent, a peroxide-based crosslinking agent, a urea-based crosslinking agent, a metal alkoxide-based crosslinking agent, a metal chelate-based crosslinking agent, a metal salt-based crosslinking agent, a carbodiimide-based crosslinking agent, an oxazoline-based crosslinking agent, an aziridine-based crosslinking agent and an amine-based crosslinking agent. The isocyanate-based crosslinking agent is preferably used although not limited thereto. The crosslinking agent may be used alone or in combination of two or more thereof.

As the isocyanate-based crosslinking agent, examples thereof include lower aliphatic polyisocyanates such as 1, 2-ethylene diisocyanate, 1,4-butylenediisocyanate and 1,6-hexamethylene diisocyanate (HDI); alicyclic polyisocyanates such as cyclopentylene diisocyanate, cyclohexylene diisocyanate, isophorone diisocyanate, hydrogenated tolylene diisocyanate and hydrogenated xylene diisocyanate; and aromatic polyisocyanates such as 2,4-tolylene diisocyanate, 2,6-tolylene diisocyanate, 4,4'-diphenylmethane diisocyanate and xylylene diisocyanate (XDI). Among these, from the standpoint of the adhesive properties, HDI or a polyfunctionalized HDI (hereinafter, sometimes referred to as a "HDI-based crosslinking agent"), and XDI or an adduct of XDI and a polyhydric alcohol (hereinafter sometimes referred to as an "XDI-based crosslinking agent") are preferable. The isocyanate-based crosslinking agent may be, for example, commercially available products such as a trimethylolpropane/tolylene diisocyanate adduct (manufactured by Nippon Polyurethane Industry Co., Ltd., trade name "CORONATE L"), a trimethylolpropane/hexamethylene diisocyanate adduct (manufactured by Nippon Polyurethane Industry Co., Ltd., trade name "CORONATE HL"), polyfunctionalized HDI (trade name "Duranate MFA-75X", manufactured by Asahi Kasei Chemicals Corporation).

The content of the crosslinking agent in the solution for forming the pressure-sensitive adhesive composition is not particularly limited but is preferably, for example, from 0.05 to 1 part by weight, more preferably from 0.1 to 0.7 parts by weight, per 100 parts by weight of the acrylic polymer. If the content of the crosslinking agent is less than 0.05 parts by weight, the crosslinking reaction may proceed insufficiently to readily cause foaming or release at a high temperature. On the other hand, if the content of the crosslinking agent exceeds 1 part by weight, the pressure-sensitive adhesive composition may become too hard, resulting in easy occurrence of peeling at a high temperature. In the case where two or more kinds of the crosslinking agents are used in combination, it may be sufficient if the total content of these two or more crosslinking agents falls in the range above.

The solution for forming the pressure-sensitive adhesive composition preferably further contains a crosslinking aid (crosslinking accelerator). By containing the crosslinking aid, the crosslinking reaction can be accelerated.

As the crosslinking aid, a conventionally known or commonly employed crosslinking aid can be used, and this is not particularly limited, but examples of the crosslinking aid which can be suitably used include an organometallic compound, a metal chelate compound, and an amine-based compound containing a plurality of hydroxyl groups. The crosslinking aids may be used alone or in combination of two or more thereof.

Examples of the organometallic compound include an organotin compound such as dibutyltin dichloride, dibutyltin oxide, dibutyltin dibromide, dibutyltin maleate, dibutyltin dilaurate, dibutyltin diacetate, dibutyltin sulfide, tributyltin methoxide, tributyltin acetate, triethyltin ethoxide, tributyltin ethoxide, dioctyltin oxide, tributyltin chloride, tributyltin trichloroacetate and tin 2-ethylhexanoate; an organotitanium compound such as dibutyltitanium dichloride, tetrabutyl titanate and butoxytitanium trichloride; an organolead compound such as lead oleate, lead 2-ethylhexanoate, lead benzoate and lead naphthenate; an organoiron compound such as iron 2-ethylhexanoate and iron acetylacetonate; an organocobalt compound such as cobalt 2-ethylhexanoate and cobalt benzoate; an organozinc compound such as zinc naphthenate and zinc 2-ethylhexanoate; and an organozirconium compound such as zirconium naphthenate. Among these, the organotin compound (particularly, dibutyltin dilaurate) is preferred.

The metal chelate compound is not particularly limited, but examples thereof include an aluminum chelate compound, a zirconium chelate compound, a titanium chelate compound, a chromium chelate compound, a cobalt chelate compound, a copper chelate compound, an iron chelate compound, a nickel chelate compound, a vanadium chelate compound, a zinc chelate compound, an indium chelate compound, a calcium chelate compound, a magnesium chelate compound, a manganese chelate compound, an yttrium chelate compound, a cerium chelate compound, a strontium chelate compound, a barium chelate compound, a molybdenum chelate compound, a lanthanum chelate compound, a tin chelate compound, a bismuth chelate compound and a platinum chelate compound. Among these, the aluminum chelate compound, the zirconium chelate compound, and the titanium chelate compound may be preferably used, and the aluminum chelate compound is more preferred.

The aluminum chelate compound is not particularly limited, but examples thereof include an aluminum tris (acylacetonate) such as aluminum tris(acetylacetonate) and aluminum tris(propionylacetonate); an aluminum tris(acetoacetic alkyl ester) such as aluminum tris(ethylacetoacetate) and aluminum tris(tert-butylacetoacetate); an aluminum [(mono or bis)(acetylacetonate)] [(bis or mono)(acetoacetic alkyl ester)] such as aluminum mono(acetylacetonate) bis (ethylacetoacetate), aluminum mono(acetylacetonate) bis(isobutylacetoacetate), aluminum mono(acetylacetonate) bis (2-ethylhexylacetoacetate) and aluminum mono(acetylacetonate) bis(dodecylacetoacetate); a [(mono or bis)(acylacetonate)] aluminum [(di or mono)alcoholate] such as (acetylacetonate) aluminum diisopropylate and bis(acetylacetonate) aluminum monoisopropylate; and a [(mono or bis)(acetoacetic alkyl ester)] aluminum [(di or mono)alcoholate] such as (ethylacetoacetate) aluminum diisopropylate and bis(ethylacetoacetate) aluminum monoisopropylate. Among these, aluminum tris(acetylacetonate) and aluminum tris(ethylacetoacetate) are preferred.

The amine-based compound containing a plurality of hydroxyl groups is not particularly limited as long as it is an amine-based compound having at least two hydroxyl groups (alcoholic hydroxyl groups) in the molecule, but examples of the compound which can be preferably used include an amine-based compound containing a plurality of hydroxyl groups, such as N,N,N',N'-tetrakis(2-hydroxyethyl)ethylenediamine and N,N,N',N'-tetrakis(2-hydroxypropyl)ethylenediamine, disclosed in JP 2009-079203 A; an ethylenediamine polyol such as a polyoxyethylene condensate of ethylenediamine, polyoxypropylene condensate of ethylenediamine, and polyoxyethylene-polyoxypropylene condensate of ethylenediamine. Also, as this amine compound, a commercial product such as trade name "EDP-300", trade name "EDP-450", trade name "EDP-1100" and trade name "Pluronic" (manufactured by ADEKA Corporation) may be utilized.

The content of the crosslinking aid in the solution for forming the pressure-sensitive adhesive composition is not particularly limited but, for example, is preferably from 0.01 to 3.0 parts by weight, more preferably from 0.05 to 1.0 parts by weight, based on the acrylic polymer (100 parts by weight). If the content of the crosslinking aid is less than 0.01 parts by weight, the crosslinking reaction may proceed insufficiently to allow for occurrence of foaming at a high temperature. On the other hand, if the content of the crosslinking aid exceeds 3.0 parts by weight, foaming initiated in an unreacted component due to excessive amount may occur at a high temperature. When two or more crosslinking aids are used in combination, it may be sufficient if the total content of these two or more crosslinking aids falls in the range above.

The solution for forming the pressure-sensitive adhesive composition may include, if necessary, known additives such as a tackifying resin (rosin derivative, polyterphen resin, petroleum resin, and oil-soluble phenol), an antiaging agent, a filler, a colorant (dye or pigment), a UV absorbing agent, an antioxidant, a chain-transfer agent, a plasticizer, a softener, a surfactant and an antistatic agent as long as the property of the present invention is not impaired. When the pressure-sensitive adhesive composition of the present invention is formed, various general solvents may be used. The kind of the solvent is not particularly limited, and examples thereof include any solvents used in the solution polymerization method as described above.

[Pressure-sensitive adhesive composition]

The pressure-sensitive adhesive composition of the present invention is formed by drying and/or curing the solution for forming the pressure-sensitive adhesive composition. Specifically, the pressure-sensitive adhesive composition of the present invention can be formed by mixing the acrylic-based polymer (or an acrylic polymer solution) with, if desired, a crosslinking agent, a solvent and other additives to prepare a solution for forming the pressure-sensitive adhesive composition, then coating (applying) the solution for forming the pressure-sensitive adhesive composition on a substrate, a separator or the like, and drying and/or curing the coating.

When the solution for forming the pressure-sensitive composition is coated, a known coating method can be used, and a general coater, for example, a gravure roll coater, a reverse roll coater, a kiss roll coater, a dip roll coater, a bar coater, a knife coater, a spray coater, a comma coater and a direct coater, can be used.

In the pressure-sensitive adhesive composition of the present invention, the shear storage elastic modulus at 85°C (hereinafter, sometimes referred to as a "shear storage elastic modulus (85°C)" or "G'(85°C)") as measured by dynamic viscoelasticity measurement is from $1\times10^4$ to $3\times10^5$ Pa, preferably from $1.2\times10^4$ to $2.5\times10^5$ Pa, more preferably from $1.35\times10^4$ to $2.3\times10^5$ Pa. If the shear storage elastic modulus (85°C) exceeds $3\times10^5$ Pa, the high-temperature stress relaxation property is poor and a laminate obtained by lamination with use of the pressure-sensitive adhesive composition readily causes warpage or distortion under high-temperature conditions. On the other hand, if the shear storage elastic modulus (85 °C) is less than $1\times10^4$ Pa, durability is lacking due to, for example, insufficient adhesive force at a high temperature or easy occurrence of foaming or release under high-temperature conditions. The shear storage elastic modulus (85°C) is measured by the dynamic viscoelastic measurement. For example, the shear storage elastic modulus can be measured by Advanced Rheometric Expansion System (ARES) manufactured by Rheometric Scientific Co., Ltd. in a shear mode under conditions of a frequency of 1 Hz, a temperature of -70°C to 200°C, and a rising-temperature rate of 5°C/min, after laminating a plurality of pressure-sensitive adhesive layers formed from the pressure-sensitive adhesive composition of the present invention so as to have a thickness of about 1.5 mm.

The shear storage elastic modulus (85°C) can be controlled, for example, by the composition of monomers forming the acrylic polymer, the weight average molecular weight of the acrylic polymer, or the amount used (amount added) of the crosslinking agent.

From the standpoint of exerting good anti-foaming release property at a high temperature, the gel fraction of the pressure-sensitive adhesive composition of the present invention is preferably from 40 to 95% (wt%), more preferably from 50 to 90%. The gal fraction can be determined as an ethyl acetate insoluble matter and, specifically, is determined as a percentage by weight (unit: wt%) of the insoluble components after immersion in ethyl acetate at 23°C for 7 days, based on the sample before immersion. If the gel fraction is less than 40%, particularly foaming may be readily caused, whereas if it exceeds 95%, particularly release may be liable to occur. Also, the stress relaxation property may be reduced. The gel fraction can be controlled, for example, by the composition of monomers forming the acrylic polymer, the weight average molecular weight, or the amount used (amount added) of the crosslinking agent.

Specifically, the gel fraction (ratio of solvent insoluble matter) is a value, for example, calculated by "Method of measuring gel fraction" to be described below.

(Method of measuring gel fraction)

About 0. 1 g of the pressure-sensitive adhesive composition is sampled, wrapped with a porous tetrafluoroethylene sheet (trade name "NTF1122", manufactured by Nitto Denko Corporation) having an average pore size of 0.2 μm, and it is tied up with a kite string and at this time, it is measured for the weight, and the weight measured is designated as the weight before immersion. The weight before immersion is the total weight of the pressure-sensitive adhesive composition, the tetrafluoroethylene sheet and the kite string. The total weight of the tetrafluoroethylene sheet and the kite string is also measured, and this weight is designated as the wrapper weight.

Subsequently, the pressure-sensitive adhesive composition wrapped with a tetrafluoroethylene sheet and tied up with a kite string (hereinafter referred to as the "sample") is put in a 50 ml-volume vessel filled with ethyl acetate, followed by allowing to stand still at 23°C for 7 days. The sample (after ethyl acetate treatment) is then taken out of the vessel, and it is transferred to an aluminum-made cup, followed by drying in a dryer at 130°C for 2 hours to remove ethyl acetate, and it is measured for the weight, and this weight is designated as the weight after immersion.

The gel fraction is calculated according to the following formula:

$$\text{Gel fraction (wt\%)} = ((A-B)/(C-B)) \times 100$$

(wherein A is the weight after immersion, B is the wrapper weight, and C is the weight before immersion).

Examples of the specific configuration of the pressure-sensitive adhesive composition of the present invention include a pressure-sensitive adhesive composition formed from a solution for forming the pressure-sensitive adhesive composition containing an acrylic polymer formed from monomer components including 1 to 30 wt% of methyl methacrylate 10 to 85 wt% of (meth)acrylic acid $C_{2-12}$ alkyl esterand 0 to 85 wt% of (meth)acrylic acid alkoxyalkyl esterbased on the total amount (100 wt%) of the monomer components forming the acrylic polymer, and a crosslinking agent. Thanks to this configuration, the anti-foaming release property and the high-temperature stress relaxation property can be exerted in a balanced manner. Furthermore, by substantially not containing a carboxyl group-containing monomer as the monomer component forming the acrylic polymer, corrosion resistance on a metal thin film or metal oxide thin film can be brought out. In addition, by incorporating from 0.5 to 20 wt% of a hydroxyl group-containing monomer as the monomer component forming the acrylic polymer, more excellent adhesion reliability can be achieved.

From the standpoint of bringing out anti-foaming release property and high-temperature stress relaxation property in a more balanced manner, particularly preferred examples of the configuration of the pressure-sensitive adhesive composition of the present invention include the following pressure-sensitive adhesive compositions (1) and (2):

(1) a pressure-sensitive adhesive composition formed from a solution for forming the pressure-sensitive adhesive composition including: 100 parts by weight of an acrylic polymer formed from monomer components containing from 5 to 20 wt% of MMA, from 5 to 40 wt% of EA, from 35 to 60 wt% of 2MEA and from 0.5 to 5 wt% of 4HBA; from 0.1 to 2.0 parts by weight of an HDI-based crosslinking agent as the crosslinking agent; and from 0.05 to 0.5 parts by weight of an organotin compound (preferably dibutyltin dilaurate); and

(2) a pressure-sensitive adhesive composition formed from a solution for forming the pressure-sensitive adhesive composition including: 100 parts by weight of an acrylic polymer formed from monomer components containing from 5 to 20 wt% of MMA, from 30 to 70 wt% of BA, from 10 to 50 wt% of EA and from 0.5 to 15 wt% of 2HEA; from 0.1 to 2.0 parts by weight of an XDI-based crosslinking agent as the crosslinking agent; and from 0.1 to 1.0 parts by weight of ethylenediamine polyol.

[Pressure-sensitive adhesive sheet]

The pressure-sensitive adhesive composition of the present invention can be used as a pressure-sensitive adhesive layer by making the composition into a sheet shape. The pressure-sensitive adhesive layer composed of the pressure-sensitive adhesive composition of the present invention may be used as a pressure-sensitive adhesive sheet by itself or may be used as a pressure-sensitive adhesive sheet having the pressure-sensitive adhesive layer.

The pressure-sensitive adhesive sheet of the present invention has at least a pressure-sensitive adhesive layer composed of the pressure-sensitive adhesive composition of the present invention. The pressure-sensitive adhesive sheet of the present invention may or may not have a substrate as long as it has the pressure-sensitive adhesive layer composed of the pressure-sensitive adhesive composition of the present invention. Accordingly, the specific configuration of the pressure-sensitive adhesive sheet of the present invention includes, for example, (1) a substrateless double-sided pressure-sensitive adhesive sheet having a configuration formed only by a pressure-sensitive adhesive layer composed of the pressure-sensitive adhesive composition of the present invention (substrateless double-sided pressure-sensitive adhesive sheet), and (2) a pressure-sensitive adhesive sheet with a substrate having a configuration where a pressure-sensitive adhesive layer composed of the pressure-sensitive adhesive composition of the present invention is formed on at least one surface of the substrate (pressure-sensitive adhesive sheet with a substrate). Of these, (1) a substrateless double-sided pressure-sensitive adhesive sheet having a configuration formed only by the pressure-sensitive adhesive layer composed of the pressure-sensitive adhesive composition of the present invention is preferred.

In the case where the pressure-sensitive adhesive sheet of the present invention has a substrate, it may be sufficient if the pressure-sensitive adhesive layer composed of the pressure-sensitive adhesive composition of the present invention is formed on at least one surface of the substrate, and a known pressure-sensitive adhesive layer, adhesive layer or the like may be formed on another surface of the substrate.

The pressure-sensitive adhesive sheet may be also made up in a roll-wound form or in a laminated sheet form. That is, the pressure-sensitive adhesive sheet of the present invention may have a form such as sheet or tape. In the case where the pressure-sensitive adhesive sheet of the present invention has a roll-wound form, the pressure-sensitive adhesive sheet may have, for example, a form of being wound into a roll in the state of the pressure-sensitive adhesive layer composed of the pressure-sensitive adhesive composition of the present invention being protected by a separator (release liner) or a release-treated layer formed on the back side of a substrate.

(Pressure-sensitive adhesive layer)

The pressure-sensitive adhesive layer constituting the pressure-sensitive adhesive sheet of the present invention is, as described above, a pressure-sensitive adhesive layer composed of the pressure-sensitive adhesive composition of the present invention. Accordingly, the pressure-sensitive adhesive layer is excellent in the anti-foaming release property and also excellent in the high-temperature stress relaxation property. Furthermore, in the case where the acrylic polymer in the pressure-sensitive adhesive composition of the present invention is an acrylic polymer formed from monomer components substantially not containing a carboxyl group-containing monomer, the pressure-sensitive adhesive layer is excellent in the corrosion resistance on a metal thin film.

The thickness of the pressure-sensitive adhesive layer is not particularly limited but is preferably from 10 to 250 $\mu$m, more preferably from 10 to 100 $\mu$m, still more preferably from 10 to 75 $\mu$m. If the thickness exceeds 250 $\mu$m, crimp may be formed when taking up the sheet during coating. If the thickness is less than 10 $\mu$m, the stress cannot be dispersed and release may be readily caused.

The total light transmittance in a visible light wavelength region (in accordance with JIS K 7361-1) of the pressure-sensitive adhesive layer is, for example, preferably 90% or more, more preferably 91% or more. Also, the haze (in accordance with JIS K 7136) of the pressure-sensitive adhesive layer is, for example, preferably 1.0% or less, more preferably 0.8% or less. If the total light transmittance and the haze are out of the ranges above, an optical product to which the pressure-sensitive adhesive sheet is laminated may be deteriorated in the transparency or appearance. The total light transmittance and the haze can be measured by using a haze meter (trade name "HM-150", manufactured by Murakami Color Research Laboratory Co., Ltd.) after laminating the pressure-sensitive adhesive layer to a slide glass (for example, having a total light transmittance of 91.8% and a haze of 0.4%).

(Substrate)

In the case where the pressure-sensitive adhesive sheet of the present invention includes a substrate, the substrate is not particularly limited, but may be various optical films such as a plastic film, an antireflection (AR) film, a polarizing plate, and a retardation film. Materials of the plastic film may be, for example, plastic material such as polyester resins such as polyethylene terephthalate (PET); acrylic resins such as polymethyl methacrylate (PMMA); polycarbonate; triacetyl celluous (TAC); polysulfone; polyarylate; polyimide; polyvinyl chloride; polyvinyl acetate; polyethylene; polypropylene; ethylene propylene copolymer; and cyclic olefin polymer such as trade name "ARTON (cyclic olefin polymer; manufactured by JSR)", trade name "ZEONOR (cyclic olefin polymer; manufactured by Nippon Zeon Co., Ltd.)". The plastic materials may be used alone or in combination of two or more thereof. The "substrate" is a part laminated to an adherend together with the pressure-sensitive adhesive layer, when the pressure-sensitive adhesive sheet is used (laminated) to the adherend (such as an optical member). The separator (release liner) released in the use (lamination) of the pressure-sensitive adhesive sheet is not included in the "substrate".

Above all, the substrate is preferably a transparent substrate. The term "transparent substrate" as used herein indicates, for example, a substrate in which the total light transmittance in a visible light wavelength region (in accordance with JIS K7361-1) is 85% or more (preferably 88% or more). Also, the haze of the substrate (in accordance with JIS K7136) is, for example, preferably 1.5% or less, more preferably 1.0% or less. Examples of the transparent substrate include a PET film and a non-oriented film such as trade name "ARTON" and trade name "Zeonoa".

The thickness of the substrate is not particularly limited, but for example, is preferably 12 to 75 $\mu$m. The substrate may have a single layer or multilayer shape. On the surface of the substrate, for example, a known/general surface treatment such as a physical treatment such as a corona discharge treatment and a plasma treatment and a chemical treatment such as a basecoat treatment, may be properly preformed.

In the case where the pressure-sensitive adhesive sheet of the present invention has a substrate, various functional films can be also used as the substrate. In this case, the pressure-sensitive adhesive sheet of the present invention can be used as a pressure-sensitive adhesive functional film including a functional film and a pressure-sensitive adhesive layer composed of the pressure-sensitive adhesive composition of the present invention on at least one surface of the functional film. The functional film is not particularly limited, but examples thereof include a film having optical functionality (such as polarization, light refraction, light reflection, light transmission, light absorbing, light diffraction, optical rotation and visibility), a film having conductivity (such as ITO film), a film having ultraviolet blocking property, and a film having hard coat property (scratch resistance). More specifically, examples of the functional film include a hard coat film (a film obtained by subjecting at least one surface of a plastic film such as PET film to a hard coat treatment), a polarizing film, a wavelength plate, a retardation film, an optical compensation film, a brightness enhancing film, a light guide plate, a reflection film, an antireflection film, a transparent conductive film (e.g., ITO film), a design film, a decorative film, a surface protective film, a prism, and a color filter. Each of the "plate" and the "film" includes a form such as plate, film and sheet. For example, the "polarizing film" includes "polarizing plate" and "polarizing sheet". Also, the "functional film" includes "functional plate" and "functional sheet".

The total light transmittance in a visible light wavelength region (in accordance with JIS K7361-1) of the pressure-sensitive adhesive sheet of the present invention is, for example, preferably 90% or more, more preferably 91 % or more. Also, the haze (in accordance with JIS K7136) of the pressure-sensitive adhesive sheet of the present invention is, for example, preferably 1.0% or less, more preferably 0.8% or less. If the total light transmittance and the haze are out of the ranges above, an optical product to which the pressure-sensitive adhesive sheet is laminated may be deteriorated in the transparency or appearance. The total light transmittance and the haze can be measured by using a haze meter (trade name "HM-150", manufactured by Murakami Color Research Laboratory Col, Ltd.) after laminating the pressure-sensitive adhesive sheet to a slide glass (for example, having a total light transmittance of 91% and a haze of 0.4%).

The 180° peeling pressure-sensitive adhesive force of the pressure-sensitive adhesive sheet of the present invention to a polyethylene terephthalate film (PET film) at 85°C [referred to as "peeling pressure-sensitive adhesive force (to PET, 85°C, 180° peel)"] is preferably 5.0 N/20 mm or more, more preferably from 6.0 N/20mm to 20.0 N/20 mm, still more preferably from 7.2 N/20mm to 16.0 N/20 mm. If the peeling pressure-sensitive adhesive force (to PET, 85°C, 180° peel) is less than 5.0 N/20 mm, the anti-foaming release property may be insufficient and the adhesion reliability at a high temperature may be reduced.

The peeling pressure-sensitive adhesive force (to PET, 85°C, 180° peel) can be measured by a 180° peel test using a PET film as the adherend at 85°C. Specifically, in accordance with JIS Z0237 (2000), using a PET film (for example, trade name "Lumirror T-60", manufactured by Toray Industries, Inc., thickness: 0.125 mm) as the adherend (test plate), the surface of the pressure-sensitive adhesive layer (a pressure-sensitive adhesive layer composed of the pressure-sensitive adhesive composition of the present invention) in the pressure-sensitive adhesive sheet of the present invention is laminated to the adherend, and then, the pressure-sensitive adhesive sheet is peeled at 180° under the conditions of 85°C and a tensile speed of 300 mm/min, whereby the peeling pressure-sensitive adhesive force above can be measured. In the case of a double-sided pressure-sensitive adhesive sheet, the measurement can be performed after laminating a backing material (for example, a PET film having a thickness of 25 $\mu$m to the pressure-sensitive adhesive layer surface (pressure-sensitive adhesive surface) on the side opposite to the surface to be measured.

The peeling rate of the pressure-sensitive adhesive sheet of the present invention as measured by a constant-load peel test at 85°C is preferably 35 mm/6 hours or less (for example, from 0 to 35 mm/6 hours), more preferably from 0 to 25 mm/6 hours. The peeling rate indicates the adhesion property at low-speed peeling under high-temperature conditions, particularly, susceptibility to foaming or release. If the peeling rate exceeds 35 mm/6 hours, the anti-foaming release property may be reduced.

The constant-load peel test at 85°C is as follows.
The surface of the pressure-sensitive adhesive layer (pressure-sensitive adhesive layer composed of the pressure-sensitive adhesive composition of the present invention) in the pressure-sensitive adhesive sheet of the present invention is laminated to one surface of a test plate (for example, PMMA plate or PET plate) and after a treatment in an autoclave for 15 minutes under the conditions of 50°C and 5 atm, a load of 50 gf is applied in the direction perpendicular to the test plate surface (in the direction away from the PET plate) at the longitudinal end of the pressure-sensitive adhesive sheet. The pressure-sensitive adhesive sheet is left standing for 6 hours under the condition of 85°C, and the length for which the pressure-sensitive adhesive sheet is peeled from the test plate (peeling distance) after 6 hours is measured, whereby the peeling rate (mm/6 hours) is calculated.

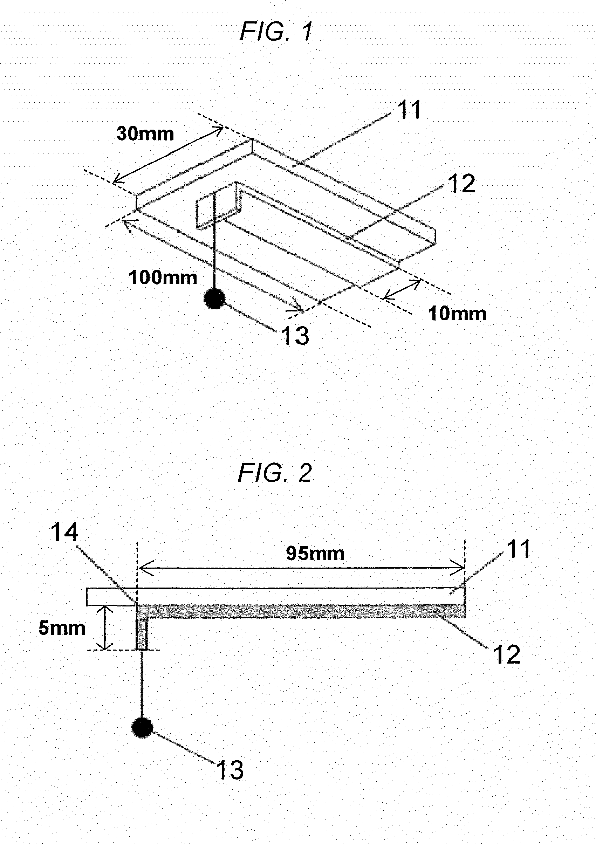

More specifically, the test method is, for example, as follows (see, Figs. 1 to 3).
[Constant-load peel test at 85°C]
The surface of the pressure-sensitive adhesive layer (pressure-sensitive adhesive layer composed of the pressure-sensitive adhesive composition of the present invention) in a pressure-sensitive adhesive sheet (width: 10 mm, length: 100 mm) is laminated to one surface of a test plate [for example, PMMA plate (trade name "ACRYLITE MR-200", manufactured by Mitsubishi Rayon Co., Ltd., length: 100 mm, width: 30 mm, thickness: 1.5 mm) or PET plate (trade name "A4100", manufactured by Toyobo Co., Ltd., length: 100 mm, width: 30 mm, thickness: 1.5 mm)], and this laminate is treated in an autoclave for 15 minutes under the conditions of 50°C and 5 atm.

Subsequently, as shown in FIGS. 1 and 2, the test plate 11 is horizontally placed such that the surface laminated with the pressure-sensitive adhesive sheet 12 the bottom surface. The pressure-sensitive adhesive sheet 12 is peeled 5 mm longitudinally from the terminal end (one terminal end) in the length direction, the weight 13 of 50 g is hung with thread from the end in the length direction (at a widthwise center position), and a load of 50 gf is applied to the end in the length direction of the pressure-sensitive adhesive sheet 12 in the direction perpendicular to the surface of the test plate. Thereafter, the system is left standing for 6 hours under the condition of 85°C, and a "peeling rate (mm/6 hours)" is calculated by measuring the peeling distance 16 of the pressure-sensitive adhesive sheet 12.

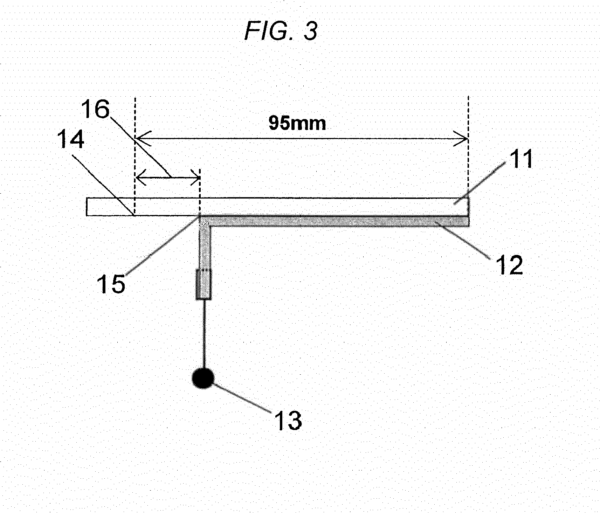

In this connection, the peeling distance is the length (longitudinal distance) of the pressure-sensitive adhesive sheet separated with the passage of 6 hours after the start of measurement and indicates the distance 16 between the end position 14 where the pressure-sensitive adhesive sheet and the test plate are closely contacted at the start of measurement, and the end position 15 where the pressure-sensitive adhesive sheet and the test plate are closely contacted after the passage of 6 hours (see, Figs. 2 and 3).

In the case where the pressure-sensitive adhesive sheet is a double-sided pressure-sensitive adhesive sheet, the measurement may be performed after a lined material is limited on the pressure-sensitive adhesive surface on the side opposite to the test film (for example, PET film having the thickness of 25 μm).

(Separator)

The surface (pressure-sensitive adhesive surface) of the pressure-sensitive adhesive layer may be protected by the separator (release liner) until the pressure-sensitive adhesive sheet of the present invention is used. In the case where the pressure-sensitive adhesive sheet of the present invention is a double-sided pressure-sensitive adhesive sheet, each pressure-sensitive adhesive surface may be protected by using separators, respectively, or protected in such a way that the surface is wound in a roll form by using one separator of which both sides are release surfaces. The separator is used as a protective material of the pressure-sensitive adhesive layer, and peeled when the pressure-sensitive adhesive layer is laminated to the adherend. In the case where the pressure-sensitive adhesive sheet of the present invention is a substrateless pressure-sensitive adhesive sheet, the separator functions as a support of the pressure-sensitive adhesive layer. The separator may not be provided. Any known release paper may be used as a separator. The separator may be, but not particularly limited to, for example, a substrate having a release treated layer, a low adhesive substrate composed of a fluorine polymer, or a low adhesive substrate composed of a non-polar polymer. As the substrate having the release treated layer, examples thereof include a plastic film or paper whose surface is treated by a release agent such as silicon type, long-chaine alkyl type, fluorine type, and molybdenum sulfide. As the fluorine-based polymer in the low adhesive substrate composed of fluorine polymer, examples thereof include polytetrafluoroethylene, polychlorotrifluoroethylene, polyvinyl fluoride, polyvinylidene fluoride, a tetrafluoroethylene-hexafluoropropylene copolymer and a chlorofluoroethylene-vinylidene fluoride copolymer. As the non-polar polymer, examples thereof include an olefine-based resin (for example, polyethylene, polypropylene and the like). The separator can be formed by using a known/general method. The thickness of the separator is not particularly limited.

The pressure-sensitive adhesive sheet of the present invention can be produced according to a normal production method for a pressure-sensitive adhesive sheet. For example, in the case where the pressure-sensitive adhesive sheet of the present invention is a substrateless double-sided pressure-sensitive adhesive sheet, the solution for forming the pressure-sensitive adhesive composition is coated on the release surface of a release liner to have a predetermined thickness in terms of thickness after drying and dried and/or cured to form a pressure-sensitive adhesive layer (pressure-sensitive adhesive composition), whereby the pressure-sensitive adhesive sheet can be produced.

When coating (applying) the solution for forming the pressure-sensitive adhesive composition, the above-described known coating method can be used.

The pressure-sensitive adhesive sheet of the present invention has the configuration above and therefore, is excellent in the anti-foaming release property and also in the high-temperature stress relaxation property. In turn, when the pressure-sensitive adhesive composition of the present invention is used for laminating optical members or the like, floating or release from the adherend under high-temperature conditions can be prevented or suppressed. Particularly, when a cover lens composed of a PMMA- or PC-made plastic substrate having no hard coat layer is used as the adherend, high anti-foaming release property is exerted. Also, in the case of forming a laminate by laminating members with each other, even when the members laminated together differ in the coefficient of linear expansion, thanks to the excellent property of relaxing a stress generated under high-temperature conditions, the laminate can be kept from warpage or distortion.

The use of the pressure-sensitive adhesive sheet of the present invention is not particularly limited, but the pressure-sensitive adhesive sheet is preferably used in laminating the optical members or in the manufacture of optical products. The optical member refers to a member having an optical characteristic (for example, a polarized property, a photorefractive property, a light scattering property, a light reflective property, a light transmitting property, a light absorbing property, a light diffractive property, an optical rotation property and visibility). The optical member is not particularly limited so long as the optical member is the member having the optical characteristic, and a member constituting display devices (image display devices) or input devices, or a member used for these devices is exemplified. Examples thereof include a polarizing plate, a wave plate, a retardation plate, an optical compensation film, a brightness enhancing film, a light guide plate, a reflective film, an anti-reflective film, a transparent conductive film (e.g. ITO film), a design film, a decoration film, a surface protective film, a prism, lens, a color filter, a transparent substrate, and a member in which these are laminated (functional film or the like). Each of the "plate" and the "film" include a plate shape, a film shape, and a sheet shape, and for example, the "polarizing film" includes a "polarizing plate" and a "polarizing sheet". The "functional film" includes a "functional plate" and a "functional sheet".

Examples of the display device include a liquid crystal display device, an organic EL (electroluminescence) display device, PDP (plasma display panel), and electronic paper. Examples of the input device include a touch panel.

The optical member is not particularly limited, but examples thereof include a member (such as sheet-form, film-form or plate-form member) composed of acrylic resin, polycarbonate resin, polyethylene terephthalate, glass or metal thin film. In this connection, the "optical member" as used in the present invention includes a member fulfilling the role of decoration or protection (such as design film, decorative film and surface protective film) while maintaining the visibility of a display device or input device as the adherend.

The pressure-sensitive adhesive sheet of the present invention can be preferably used in an application on a electrostatic capacity type touch panel, particularly, for lamination to a cover lens (particularly, a cover lens made of PMMA or PC) provided on the surface of a touch panel in the manufacture of the electrostatic capacity type touch panel. Specifically, the pressure-sensitive adhesive sheet can be preferably used for laminating the cover lens and other member (for example, a PET film), thereby stacking them.

In the case where a carboxyl group-containing monomer is substantially not contained as the monomer component forming the acrylic polymer in the pressure-sensitive adhesive composition of the present invention, the pressure-sensitive adhesive sheet of the present invention is excellent also in the corrosion resistance and therefore, can be preferably used for lamination particularly to a metal thin film (including a metal oxide thin film). The metal thin film is a thin film composed of a metal, a metal oxide or a mixture thereof and is not particularly limited, but examples thereof include thin films of ITO (indium tin oxide), ZnO, SnO and CTO (cadmium tin oxide). The thickness of the metal thin film is not particularly limited but is preferably from 100 to 2,000 Å. The metal thin film such as ITO is provided, for example, on a PET film and used as a transparent conductive film.

In the case where a carboxyl group-containing monomer is substantially not contained as the monomer component forming the acrylic polymer in the pressure-sensitive adhesive composition of the present invention, the pressure-sensitive adhesive sheet of the present invention can be suitably used for both of lamination to a cover lens and lamination to a transparent conductive film. Accordingly, the pressure-sensitive adhesive sheet of the present invention has high versatility particularly in the production of a electrostatic capacity type touch panel, and this is preferred from the standpoint of enhancing the productivity.

In the case where the pressure-sensitive adhesive sheet of the present invention is a double-sided pressure-sensitive adhesive sheet, by attaching and laminating the pressure-sensitive adhesive sheet of the present invention to at least one surface of various functional films, a pressure-sensitive adhesive functional film including a functional film and a pressure-sensitive adhesive layer composed of the pressure-sensitive adhesive composition of the present invention on at least one surface of the functional film can be obtained. The functional film is as described above. The pressure-sensitive adhesive sheet (double-sided pressure-sensitive adhesive sheet) of the present invention used for the pressure-sensitive adhesive functional film may be a substrateless pressure-sensitive adhesive sheet or a pressure-sensitive adhesive sheet with substrate.

Examples

The present invention is described in greater detail below by referring to Examples, but the present invention is not limited to these Examples. In the following description and Table 1, the blending amount (amount added) of each of "Duranate MFA-75X" (HDI-based crosslinking agent) and "TAKENATE D110N" (XDI-based crosslinking agent) indicates the amount added (parts by weight) in terms of the solid content.

Example 1:

5 Parts by weight of methyl methacrylate (MMA), 1 part by weight of 4-hydroxybutyl acrylate (4HBA), 40 parts by weight of ethyl acrylate (EA) and 54 parts by weight of 2-methoxyethyl acrylate (2MEA) as the monomer components, 0.25 parts by weight of 2,2'-azobisisobutyronitrile as the polymerization initiator, and 185.7 parts by weight of ethyl acetate as the polymerization solvent were added into a separable flask, and the mixture was stirred for 1 hour while introducing a nitrogen gas thereinto. In this way, oxygen in the polymerization system was removed and then, reaction was allowed to proceed for 5 hours by raising the temperature to 65°C and further allowed to proceed for 2 hours by raising the temperature to 70°C. Thereafter, toluene was added to obtain an acrylic polymer solution having a solid matter concentration of 30 wt%. The weight average molecular weight of the acrylic polymer in the acrylic polymer solution was 800,000, and the glass transition temperature (Tg) was -35°C.

As shown in Table 1, to the acrylic polymer solution above, 0.3 parts by weight of an HDI-based crosslinking agent (trade name "Duranate MFA-75X", manufactured by Asahi Kasei Chemicals Corporation) as the crosslinking agent and 0.2 parts by weight of dibutyltin dilaurate as the crosslinking aid were added per 100 parts by weight of the acrylic polymer and mixed to prepare a solution for forming the pressure-sensitive adhesive composition.

The solution for forming the pressure-sensitive adhesive composition obtained above was cast-coated on the release surface (release-treated surface) of a separator (release liner) (trade name "A-43", manufactured by Teijin DuPont Films Japan Limited, thickness: 38 μm) so as to give a pressure-sensitive adhesive layer having a thickness of 25 μm after drying, followed by drying under a normal pressure at 130°C for 2 minutes and aging was further performed at 50°C for 48 hours, and a separator (trade name "A-31", manufactured by Teijin DuPont Films Japan Limited, thickness: 38 μm) was provided on the surface of the dried pressure-sensitive adhesive layer to obtain a double-sided pressure-sensitive adhesive sheet (substrateless double-sided pressure-sensitive adhesive sheet) having a configuration composed of only a pressure-sensitive adhesive layer (pressure-sensitive adhesive composition) formed from the solution for forming the pressure-sensitive adhesive composition above.

Example 2:

A double-sided pressure-sensitive adhesive sheet (substrateless double-sided pressure-sensitive adhesive sheet) was obtained in the same manner as in Example 1 except that as shown in Table 1, 15 parts by weight of methyl methacrylate (MMA), 3 parts by weight of 4-hydroxybutyl acrylate (4HBA), 40 parts by weight of ethyl acrylate (EA) and 42 parts by weight of 2-methoxyethyl acrylate (2MEA) were used as the monomer components and 0.3 parts by weight of an XDI-based crosslinking agent (trade name "TAKENATE D110N", manufactured by Mitsui Chemicals, Inc.) was used in place of the HDI-based crosslinking agent.

Example 3:

A double-sided pressure-sensitive adhesive sheet (substrateless double-sided pressure-sensitive adhesive sheet) was obtained in the same manner as in Example 1 except that as shown in Table 1, 5 parts by weight of methyl methacrylate (MMA), 5 parts by weight of 4-hydroxybutyl acrylate (4HBA), 65 parts by weight of ethyl acrylate (EA) and 25 parts by weight of 2-methoxyethyl acrylate (2MEA) were used as the monomer components.

Example 4:

A double-sided pressure-sensitive adhesive sheet (substrateless double-sided pressure-sensitive adhesive sheet) was obtained in the same manner as in Example 1 except that as shown in Table 1, 10 parts by weight of methyl methacrylate (MMA), 1 part by weight of 4-hydroxybutyl acrylate (4HBA), 24 parts by weight of ethyl acrylate (EA) and 65 parts by weight of 2-methoxyethyl acrylate (2MEA) were used as the monomer components, the blending amount of the HDI-based crosslinking agent (trade name "Duranate MFA-75X", manufactured by Asahi Kasei Chemicals Corporation) was changed to 0.2 parts by weight, and the blending amount of dibutyltin dilaurate was changed to 0.15 parts by weight.

Example 5:

A double-sided pressure-sensitive adhesive sheet (substrateless double-sided pressure-sensitive adhesive sheet) was obtained in the same manner as in Example 1 except that as shown in Table 1, 10 parts by weight of methyl methacrylate (MMA), 5 parts by weight of 4-hydroxybutyl acrylate (4HBA), 40 parts by weight of ethyl acrylate (EA) and 45 parts by weight of 2-methoxyethyl acrylate (2MEA) were used as the monomer components, the blending amount of the HDI-based crosslinking agent (trade name "Duranate MFA-75X", manufactured by Asahi Kasei Chemicals Corporation) was changed to 0.5 parts by weight, and the blending amount of dibutyltin dilaurate was changed to 0.3 parts by weight.

Example 6:

A double-sided pressure-sensitive adhesive sheet (substrateless double-sided pressure-sensitive adhesive sheet) was obtained in the same manner as in Example 1 except that as shown in Table 1, 10 parts by weight of methyl methacrylate (MMA), 1 part by weight of 4-hydroxybutyl acrylate (4HBA), 23 parts by weight of ethyl acrylate (EA) and 66 parts by weight of 2-methoxyethyl acrylate (2MEA) were used as the monomer components.

Example 7:

A double-sided pressure-sensitive adhesive sheet (substrateless double-sided pressure-sensitive adhesive sheet) was obtained in the same manner as in Example 1 except that as shown in Table 1, 12 parts by weight of methyl methacrylate (MMA), 5 parts by weight of 4-hydroxybutyl acrylate (4HBA), 38 parts by weight of ethyl acrylate (EA) and 45 parts by weight of 2-methoxyethyl acrylate (2MEA) were used as the monomer components, the blending amount of the HDI-based crosslinking agent (trade name "Duranate MFA-75X", manufactured by Asahi Kasei Chemicals Corporation) was changed to 0.35 parts by weight, and the blending amount of dibutyltin dilaurate was changed to 0.25 parts by weight.

Comparative Example 1:

A double-sided pressure-sensitive adhesive sheet (substrateless double-sided pressure-sensitive adhesive sheet) was obtained in the same manner as in Example 1 except that as shown in Table 1, 1 part by weight of 4-hydroxybutyl acrylate (4HBA), 59 parts by weight of ethyl acrylate (EA) and 40 parts by weight of 2-ethylhexyl acrylate (2EHA) were used as the monomer components, 0.3 parts by weight of an XDI-based crosslinking agent (trade name "TAKENATE D110N", manufactured by Mitsui Chemicals, Inc.) was used in place of the HDI-based crosslinking agent, and a crosslinking aid was not used.

Comparative Example 2:

A double-sided pressure-sensitive adhesive sheet (substrateless double-sided pressure-sensitive adhesive sheet) was obtained in the same manner as in Example 1 except that as shown in Table 1, 50 parts by weight of ethyl acrylate (EA), 1 part by weight of acrylic acid (AA), and 49 parts by weight of 2-ethylhexyl acrylate (2EHA) were used as the monomer components, 0.2 parts by weight of an XDI-based crosslinking agent (trade name "TAKENATE D110N", manufactured by Mitsui Chemicals, Inc.) was used in place of the HDI-based crosslinking agent, and 0.2 parts by weight of acetylacetone aluminum was used in place of the dibutyltin dilaurate.

Comparative Example 3:

A double-sided pressure-sensitive adhesive sheet (substrateless double-sided pressure-sensitive adhesive sheet) was obtained in the same manner as in Example 1 except that as shown in Table 1, 2 parts by weight of acrylic acid (AA) and 98 parts by weight of 2-ethylhexyl acrylate (2EHA) were used as the monomer components, 0.4 parts by weight of an epoxy-based crosslinking agent (trade name "TETRAD-C", manufactured by Mitsubishi Gas Chemical Company, Inc.) was used in place of the HDI-based crosslinking agent, and 0.2 parts by weight of acetylacetone aluminum was used in place of the dibutyltin dilaurate.

Comparative Example 4:

A double-sided pressure-sensitive adhesive sheet (substrateless double-sided pressure-sensitive adhesive sheet) was obtained in the same manner as in Comparative Example 3 except that as shown in Table 1, 5 parts by weight of acrylic acid (AA) and 95 parts by weight of butyl acrylate (BA) were used as the monomer components and the blending amount of the epoxy-based crosslinking agent (trade name "TETRAD-C", manufactured by Mitsubishi Gas Chemical Company, Inc.) was changed to 0.2 parts by weight.

Comparative Example 5:

A double-sided pressure-sensitive adhesive sheet (substrateless double-sided pressure-sensitive adhesive sheet) was obtained in the same manner as in Example 1 except that as shown in Table 1, 1 part by weight of 4-hydroxybutyl acrylate (4HBA) and 99 parts by weight of 2-ethylhexyl acrylate (2EHA) were used as the monomer components, and 0.1 parts by weight of a polyol in which propylene oxide is added to ethylenediamine (trade name "EDP-300", manufactured by ADEKA Corporation) was used in place of the dibutyltin dilaurate.

(Evaluation)

The double-sided pressure-sensitive adhesive sheets obtained in Examples and Comparative Examples were subjected to the following evaluations. The gel fraction of the pressure-sensitive adhesive layer (pressure-sensitive adhesive composition) was measured according to the "Method of measuring gel fraction" above, and the measurement results are shown in the column of "Gel Fraction" in Table 1.

(1) Shear storage elastic modulus at 85°C

After peeling the separator from each of the double-sided pressure-sensitive adhesive sheets obtained in Examples and Comparative Examples, the pressure-sensitive adhesive layers were laminated to produce a laminate having a thickness of about 1.5 mm, and this laminate was used as the measurement sample.
The measurement sample was measured by using "Advanced Rheometric Expansion System (ARES)" manufactured by Rheometric Scientific under the condition of a frequency of 1 Hz in a range of -70 to 200°C at a temperature-rising rate of 5°C/min to determine the shear storage elastic modulus at 85°C. The measurement results are shown in the column of "Shear storage elastic modulus (85°C)" in Table 1.

(2) Anti-foaming release property (anti-foaming property and anti-release property)

After peeling the separator from the pressure-sensitive adhesive surface on one side of each of the double-sided pressure-sensitive adhesive sheets obtained in Examples and Comparative Examples, the pressure-sensitive adhesive surface was laminated to the conductive film surface side of a transparent conductive film (trade name "ELECRYSTA V270L-TFMP", manufactured by Nitto Denko Corporation, thickness: 170 $\mu$m), and the resulting laminate was cut out into a width of 100 mm and a length of 100 mm to produce a sheet piece.
The remaining separator was peeled from the sheet piece produced above, and the exposed pressure-sensitive adhesive surface was laminated to one surface of a PMMA plate (acrylic plate, trade name "ACRYLITE L", manufactured by Mitsubishi Rayon Co., Ltd., thickness: 1 mm) by means of a roll laminator under a pressure (linear pressure) of 50 N/cm to produce an evaluation sample having a layer structure of "transparent conductive film/pressure-sensitive adhesive layer (double-sided pressure-sensitive adhesive sheet)/PMMA plate".
This evaluation sample was heat-treated in an oven at 80°C for 5 hours (heat resistance test). After the heat resistance test, the adhesion interface (interface between the pressure-sensitive adhesive layer and the PMMA plate) of the evaluation sample was observed with an eye, and by confirming the presence or absence of foaming and the presence or absence of release or floating, the anti-foaming release property (anti-foaming property and anti-release property) was evaluated according to the following criteria. The evaluation results are shown in the columns of "Anti-foaming property" and "Anti-release property", respectively, in Table 1.
[Anti-foaming property]

A (Good): Foaming was not confirmed in the laminated portion.
B (Bad): Foaming was confirmed in the laminated portion.

[Anti-release property]

A (Good): Floating or release was not confirmed in the laminated portion.
B (Bad): Floating or release was confirmed in the laminated portion.

(3) Warpage of Laminate

After peeling the separator from the pressure-sensitive adhesive surface on one side of each of the double-sided pressure-sensitive adhesive sheets obtained in Examples and Comparative Examples, the conductive film surface side of a transparent conductive film (trade name "ELECRYSTA V270L-TFMP", manufactured by Nitto Denko Corporation, thickness: 170 $\mu$m) was laminated to the pressure-sensitive adhesive surface, and the resulting laminate was cut out into a width of 100 mm and a length of 100 mm to produce a sheet piece.
The remaining separator was peeled from the sheet piece produced above, and the exposed pressure-sensitive adhesive surface was laminated to one surface of a PMMA plate (acrylic plate, trade name "ACRYLITE L", manufactured by Mitsubishi Rayon Co., Ltd., thickness: 1 mm) by means of a roll laminator under a pressure (linear pressure) of 50 N/cm to produce an evaluation sample having a layer structure of "transparent conductive film/pressure-sensitive adhesive layer (double-sided pressure-sensitive adhesive sheet)/PMMA plate".
This evaluation sample was heat-treated in an oven at 85°C for 50 hours. Immediately after the sample was taken out of the oven, the presence or absence of warpage in the evaluation sample was confirmed with an eye, and it was rated A (no warpage, good stress relaxation property) when warpage was not confirmed, and it was rated B (presence of warpage, poor stress relaxation property) when warpage was confirmed. The evaluation results are shown in the column of "Warpage of laminate" in Table 1.

(4) Constant-Load Peel Test at 85°C (see, Figs. 1 to 3)

The double-sided pressure-sensitive adhesive sheet obtained in each of Examples and Comparative Examples was cut into a width of 10 mm and a length of 100 mm, and after peeling the separator from one pressure-sensitive adhesive surface, a PET film (trade name "Lumirror S-10", manufactured by Toray Industries, Inc., thickness: 25 $\mu$m) was laminated (backing) to the pressure-sensitive adhesive surface to produce a measurement sample 12 (lamination of double-sided pressure-sensitive adhesive sheet/PET).

In the measurement sample 12, the remaining separator was peeled from the double-sided pressure-sensitive adhesive sheet, and the exposed pressure-sensitive adhesive surface was pressure-bonded to one surface (center part) of a polyethylene terephthalate plate 11 [PET plate, trade name "A4100", manufactured by Toyobo Co., Ltd., length: 100 mm, width: 30 mm, thickness: 0.125 mm)] by moving a 2-kg roller back and forth once.

Subsequently, the PET plate 11 to which the measurement sample 12 was laminated was treated in an autoclave under the conditions of 50°C and 5 atm for 15 minutes.

After the treatment, the PET plate 11 to which the measurement sample 12 was laminated was taken out of the autoclave, and the PET plate 11 was horizontally set by using a clamp such that the surface to which the measurement sample 12 was laminated came to downside (Figs. 1 and 2).

As shown in Figs. 1 and 2, the measurement sample 12 was peeled from the PET plate 11 by 5 mm in the length direction from the longitudinal end of the sample. Furthermore, a weight 13 of 50 g was hung with a string from the longitudinal end (the peeled portion) of the measurement sample 12, and a load of 50 gf was applied thereto in the direction perpendicular (downward) to the surface of the PET plate 11. The weight 13 was fixed to the distal end of the string passed through a hole bored in the portion of 5 mm from the longitudinal end in the widthwise center of the measurement sample 12.

After applying the load, the sample was left standing for 6 hours under the condition of 85°C. The distance for which the measurement sample 12 was peeled (peeling distance 16) with the passage of 6 hours (during standing for 6 hours) after the start of measurement was measured, and the peeling rate (mm/6 hours) was calculated. The measurement results are shown in the column of "Peeling rate (to PET, constant load)" in Table 1. In this connection, when the measurement sample 12 was completely peeled from the PET plate 11 and fell down with the passage of 6 hours from the start of measurement, this is shown as "fall" in Table 1.

The peeling distance 16 is the peeling distance in the length direction of the measurement sample 12 and indicates a distance 16 from the end position 14 where the double-sided pressure-sensitive adhesive sheet and the PET plate 11 are closely contacted at the start of measurement, to the end position 15 where the double-sided pressure-sensitive adhesive sheet and the PET plate 11 are closely contacted after the passage of 6 hours (see, Figs. 2 and 3). The peeling distance 16 is measured at the widthwise center position of the measurement sample 12.

(Table 1)

| | | | | Example 1 | 2 | 3 | 4 | 5 | 6 | 7 |
|---|---|---|---|---|---|---|---|---|---|---|
| Solution for forming the pressure-sensitive adhesive composition | Acrylic polymer | Composition | MMA | 5 | 15 | 5 | 10 | 10 | 10 | 12 |
| | | | 4HBA | 1 | 3 | 5 | 1 | 5 | 1 | 5 |
| | | | EA | 40 | 40 | 65 | 24 | 40 | 23 | 38 |
| | | | AA | - | - | - | - | - | - | - |
| | | | 2EHA | - | - | - | - | - | - | - |
| | | | BA | - | - | - | - | - | - | - |
| | | | 2MEA | 54 | 42 | 25 | 65 | 45 | 66 | 45 |
| | | Tg (°C) | | -35 | -30 | -25 | -33 | -28 | -33 | -28 |
| | | Mw | | 800,000 | 1,000,000 | 600,000 | 900,000 | 900,000 | 900,000 | 900,000 |
| | Crosslinking agent | Kind | | HDI | XDI | HDI | HDI | HDI | HDI | HDI |
| | | Amount (parts by weight/per 100 parts by weight of acrylic polymer) | | 0.3 | 0.3 | 0.3 | 0.2 | 0.5 | 0.3 | 0.35 |
| | Crosslinking aid | Kind | | Tin | Tin | Tin | Tin | Tin | Tin | Tin |
| | | Amount (parts by weight/per 100 parts by weight of acrylic polymer) | | 0.2 | 0.2 | 0.2 | 0.15 | 0.3 | 0.2 | 0.25 |
| Pressure-sensitive adhesive layer (pressure-sensitive adhesive composition) | Shear storage elastic modulus (85°C) ($\times 10^4$ Pa) | | | 20 | 20 | 19 | 22 | 21 | 22 | 22 |
| | Gel fraction (%) | | | 70 | 70 | 70 | 60 | 80 | 72 | 75 |
| Peeling rate (to PET, constant load) (mm/6 hours) | | | | 6.3 | 6.1 | 6.0 | 7.2 | 6.5 | 7.2 | 6.5 |
| Anti-foaming property | | | | A | A | A | A | A | A | A |
| Anti-release property | | | | A | A | A | A | A | A | A |
| Warpage of laminate | | | | A | A | A | A | A | A | A |

(Table 1 continued)

| | | | | Comparative Example 1 | 2 | 3 | 4 | 5 |
|---|---|---|---|---|---|---|---|---|
| Solution for forming the pressure-sensitive adhesive composition | Acrylic polymer | Composition | MMA | - | - | - | - | - |
| | | | 4HBA | 1 | - | - | - | 1 |
| | | | EA | 59 | 50 | - | - | - |
| | | | AA | - | 1 | 2 | 5 | - |
| | | | 2EHA | 40 | 49 | 98 | - | 99 |
| | | | BA | - | - | - | 95 | - |
| | | | 2MEA | - | - | - | - | - |
| | | Tg (°C) | | -42 | -48 | -73 | -70 | -75 |
| | | Mw | | 1,200,000 | 800,000 | 1,000,000 | 900,000 | 1,200,000 |
| | Crosslinking agent | Kind | | XDI | XDI | T/C | T/C | HDI |
| | | Amount (parts by weight/per 100 parts by weight of acrylic polymer) | | 0.3 | 0.2 | 0.4 | 0.2 | 0.3 |
| | Crosslinking aid | Kind | | - | AL | AL | AL | EDP |
| | | Amount (parts by weight/per 100 parts by weight of acrylic polymer) | | - | 0.2 | 0.2 | 0.2 | 0.1 |
| Pressure-sensitive adhesive layer (pressure-sensitive adhesive composition) | Shear storage elastic modulus (85°C) ($\times 10^4$ Pa) | | | 12 | 8 | 9 | 12 | 15 |
| | Gel fraction (%) | | | 70 | 65 | 60 | 62 | 50 |
| Peeling rate (to PET, constant load) (mm/6 hours) | | | | 12 | 10 | fall | fall | fall |
| Anti-foaming property | | | | B | B | B | B | B |
| Anti-release property | | | | B | B | B | B | B |
| Warpage of laminate | | | | A | A | B | B | B |

As apparent from the results in Table 1, the pressure-sensitive adhesive sheet of the present invention (the pressure-sensitive adhesive composition of the present invention) (Examples) is excellent in the anti-foaming release property. Also, the laminate obtained by lamination through the pressure-sensitive adhesive sheet of the present invention

(the pressure-sensitive adhesive composition of the present invention) causes no warpage even when heated, revealing excellent high-temperature stress relaxation property. On the other hand, the pressure-sensitive adhesive sheet (pressure-sensitive adhesive composition) of Comparative Examples exhibits bad anti-foaming release property, and the laminate obtained by lamination through the pressure-sensitive adhesive sheet causes warpage after heating and thus, is poor in the high-temperature stress relaxation property.

Abbreviations in the Table 1 are as follows.

MMA: Methyl methacrylate

4HBA: 4-Hydroxybutyl acrylate

EA: Ethyl acrylate

AA: Acrylic acid

2EHA: 2-Ethylhexyl acrylate

BA: Butyl acrylate (n-butyl acrylate)

2MEA: 2-Methoxyethyl acrylate

HDI: HDI-based crosslinking agent (polyfunctionalized HDI) (trade name "Duranate MFA-75X", manufactured by Asahi Kasei Chemicals Corporation)

XDI: XDI-based crosslinking agent (trade name "TAKENATE D110N", manufactured by Mitsui Chemicals, Inc.)

T/C: Epoxy-based crosslinking agent (trade name "TETRAD-C", manufactured by Mitsubishi Gas Chemical Company, Inc.)

Tin: Dibutyltin dilaurate

AL: Acetylacetone aluminum

EDP: A polyol in which propylene oxide is added to ethylenediamine (trade name "EDP-300", manufactured by ADEKA Corporation)

While the invention has been described in detail and with reference to specific embodiments thereof, it will be apparent to one skilled in the art that various changes and modifications can be made therein without departing from the spirit and scope thereof.

This application is based on Japanese Patent Application No. 2011-099841 filed on April 27, 2011, the entire subject matter of which is incorporated herein by reference.

The present invention provides the following pressure-sensitive adhesive composition and pressure-sensitive adhesive sheet.

(1) A pressure-sensitive adhesive composition, comprising an acrylic polymer which is formed from a monomer component comprising methyl methacrylate and has a glass transition temperature (Tg) of -40°C or more, wherein the pressure-sensitive adhesive composition has a shear storage elastic modulus at 85°C as measured by a dynamic viscoelasticity measurement of from $1 \times 10^4$ to $3 \times 10^5$ Pa.

(2) The pressure-sensitive adhesive composition according to (1), wherein a content of the methyl methacrylate is 1 to 30 wt% based on a total amount (100 wt%) of the monomer component forming the acrylic polymer.

(3) The pressure-sensitive adhesive composition according to (1) or (2), which has a gel fraction of from 40 to 95%.

(4) The pressure-sensitive adhesive composition according to any one of (1) to (3), wherein a content of the acrylic polymer is 65 wt% or more based on the pressure-sensitive adhesive composition (100 wt%).

(5) The pressure-sensitive adhesive composition according to any one of (1) to (4), wherein the monomer component forming the acrylic polymer does not substantially include a carboxyl group-containing monomer.

(6) The pressure-sensitive adhesive composition according to any one of (1) to (5), wherein the monomer component forming the acrylic polymer comprises a polar group-containing monomer in an amount of 0.5 to 20 wt% based on a total amount (100 wt%) of the monomer component forming the acrylic polymer.

(7) The pressure-sensitive adhesive composition according to any one of (1) to (6), which is formed from a solution for forming the pressure-sensitive adhesive composition, the solution comprising the acrylic polymer and a crosslinking agent, wherein a content of the crosslinking agent is from 0.05 to 1 part by weight per 100 parts by weight of the acrylic polymer.

(8) A pressure-sensitive adhesive sheet, comprising a pressure-sensitive adhesive layer composed of the pressure-sensitive adhesive composition according to any one of (1) to (7).

(9) A pressure-sensitive adhesive sheet, comprising a pressure-sensitive adhesive layer composed of the pressure-sensitive adhesive composition according to any one of (1) to (7), which is used in an application on an electrostatic capacity type touch panel.

(10) A pressure-sensitive adhesive sheet, comprising a pressure-sensitive adhesive layer composed of the pressure-sensitive adhesive composition according to any one of (1) to (7), which is used for lamination to a metal thin film.

(11) The pressure-sensitive adhesive sheet according to any one of (8) to (10), wherein a thickness of the pressure-sensitive adhesive layer is from 10 to 250 $\mu$m.

Description of Reference Numerals and Signs

11: Test plate (PET plate)
12: Double-sided pressure-sensitive adhesive sheet (or measurement sample (double-sided pressure-sensitive adhesive sheet/PET film))
13: Weight
14: End position where the double-sided pressure-sensitive adhesive sheet (or measurement sample) and the test plate are closely contacted at the start of measurement
15: End position where the double-sided pressure-sensitive adhesive sheet (or measurement sample) and the test plate are closely contacted after the passage of 6 hours
16: Peeling distance

**Claims**

1. A pressure-sensitive adhesive composition, comprising an acrylic polymer which is formed from a monomer component comprising methyl methacrylate and has a glass transition temperature (Tg) of -40°C or more, wherein the pressure-sensitive adhesive composition has a shear storage elastic modulus at 85°C as measured by a dynamic viscoelasticity measurement of from $1 \times 10^4$ to $3 \times 10^5$ Pa.

2. The pressure-sensitive adhesive composition according to claim 1,
   wherein a content of the methyl methacrylate is 1 to 30 wt% based on a total amount (100 wt%) of the monomer component forming the acrylic polymer.

3. The pressure-sensitive adhesive composition according to claim 1 or 2, which has a gel fraction of from 40 to 95%.

4. The pressure-sensitive adhesive composition according to any one of claims 1 to 3, wherein a content of the acrylic polymer is 65 wt% or more based on the pressure-sensitive adhesive composition (100 wt%).

5. The pressure-sensitive adhesive composition according to any one of claims 1 to 4, wherein the monomer component forming the acrylic polymer does not substantially include a carboxyl group-containing monomer.

6. The pressure-sensitive adhesive composition according to any one of claims 1 to 5, wherein the monomer component forming the acrylic polymer comprises a polar group-containing monomer in an amount of 0.5 to 20 wt% based on a total amount (100 wt%) of the monomer component forming the acrylic polymer.

7. The pressure-sensitive adhesive composition according to any one of claims 1 to 6, which is formed from a solution for forming the pressure-sensitive adhesive composition, the solution comprising the acrylic polymer and a crosslinking agent, wherein a content of the crosslinking agent is from 0.05 to 1 part by weight per 100 parts by weight of the acrylic polymer.

8. A pressure-sensitive adhesive sheet, comprising a pressure-sensitive adhesive layer composed of the pressure-sensitive adhesive composition according to any one of claims 1 to 7.

9. A pressure-sensitive adhesive sheet, comprising a pressure-sensitive adhesive layer composed of the pressure-sensitive adhesive composition according to any one of claims 1 to 7, which is used in an application on an electrostatic capacity type touch panel.

10. A pressure-sensitive adhesive sheet, comprising a pressure-sensitive adhesive layer composed of the pressure-sensitive adhesive composition according to any one of claims 1 to 7, which is used for lamination to a metal thin film.

11. The pressure-sensitive adhesive sheet according to any one of claims 8 to 10, wherein a thickness of the pressure-sensitive adhesive layer is from 10 to 250 μm.

## FIG. 1

## FIG. 2

FIG. 3

Europäisches
Patentamt

European
Patent Office

Office européen
des brevets

## EUROPEAN SEARCH REPORT

**Application Number**

EP 12 16 5881

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/224415 A1 (SATAKE MASAYUKI [JP] ET AL) 27 September 2007 (2007-09-27) * abstract * * paragraphs [0001], [0092], [0093]; claims * | 1-6,8-11 | INV. C09J133/06 C09J7/02 |
| X | EP 1 589 085 A1 (LINTEC CORP [JP]) 26 October 2005 (2005-10-26) * examples 1,6 * | 1-8 | |
| X | US 2005/136251 A1 (KISHIMOTO TOMOKO [JP] ET AL) 23 June 2005 (2005-06-23) * abstract * * examples 1,3 * | 1-6 | |
| X,P | US 2011/136322 A1 (SATO YOSUKE [JP] ET AL) 9 June 2011 (2011-06-09) * abstract * * claims 1,3; examples 1,4; table 1 * | 1-8 | |
| A | HANS-GEORG ELIAS ED - HANS-GEORG ELIAS: "MAKROMOLEKULE , GRUNDLAGEN: STRUKTUR, SYNTHESE, EIGENSCHAFTEN, THERMISCHE UMWANDLUNGEN UND RELAXIATIONEN", 1 January 1990 (1990-01-01), MAKROMOLEKULE , GRUNDLAGEN: STRUKTUR, SYNTHESE, EIGENSCHAFTEN, HÜTHIG & WEPF VERLAG, BASEL HEIDELBERG NEW YORK, PAGE(S) 845 - 857, XP002594550, ISBN: 978-3-85739-101-9 * formula 22-63, Tab. 22-11 * | 1 | **TECHNICAL FIELDS SEARCHED (IPC)** C09J |

-/--

The present search report has been drawn up for all claims

| Place of search | Date of completion of the search | Examiner |
|---|---|---|
| Munich | 9 August 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 12 16 5881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERICH PENZEL ET AL: "Some properties of copolymers of vinylidene chloride with acrylates and methacrylates, Part 1", ANGEWANDTE MAKROMOLEKULARE CHEMIE. APPLIED MACROMOLECULARCHEMISTRY AND PHYSICS, WILEY VCH, WEINHEIM, DE, vol. 273, no. 4703, 1 January 1999 (1999-01-01), pages 15-27, XP002594551, ISSN: 0003-3146 * table 1 * | 1 | |
| A | "Katalog Handbuch Feinchemikalien, product No 18,206-0", 1 January 1999 (1999-01-01), KATALOG HANDBUCH FEINCHEMIKALIEN, ALDRICH, PAGE(S) 1588, XP002594552, * the whole document * | 1 | |
| A | RUDOF RIESEN ET AL: "Die Glasübergangtemperatur gemessen mit verschiedenen TA-Techniken, Teil 2: Ermittlung der Glasübergangstemperaturen", INTERNET CITATION, 1 February 2003 (2003-02-01), pages 1-20, XP002594785, Retrieved from the Internet: URL:http://de.mt.com/global/de/home/suppor tive_content/usercom/TA_UserCom18.z2vUzxjP yOvKAxrVCMLHBfbHCI45nZaOnG--.MediaFileComp onent.html/tauserc18d.pdf [retrieved on 2010-08-02] * figure 2; table 1 * | 1 | TECHNICAL FIELDS SEARCHED (IPC) |

The present search report has been drawn up for all claims

| Place of search | Date of completion of the search | Examiner |
|---|---|---|
| Munich | 9 August 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 16 5881

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2012

| Patent document cited in search report | | Publication date | Patent family member(s) | | | Publication date |
|---|---|---|---|---|---|---|
| US 2007224415 | A1 | 27-09-2007 | CN | 1957274 | A | 02-05-2007 |
| | | | JP | 4756626 | B2 | 24-08-2011 |
| | | | JP | 2005338150 | A | 08-12-2005 |
| | | | KR | 20070032290 | A | 21-03-2007 |
| | | | US | 2007224415 | A1 | 27-09-2007 |
| | | | WO | 2005114270 | A1 | 01-12-2005 |
| EP 1589085 | A1 | 26-10-2005 | CN | 1738882 | A | 22-02-2006 |
| | | | EP | 1589085 | A1 | 26-10-2005 |
| | | | JP | 4804921 | B2 | 02-11-2011 |
| | | | KR | 20050088251 | A | 02-09-2005 |
| | | | MY | 136815 | A | 28-11-2008 |
| | | | PT | 1589085 | E | 06-06-2008 |
| | | | TW | I310230 | B | 21-05-2009 |
| | | | US | 2006134406 | A1 | 22-06-2006 |
| | | | WO | 2004065510 | A1 | 05-08-2004 |
| US 2005136251 | A1 | 23-06-2005 | CN | 1637104 | A | 13-07-2005 |
| | | | JP | 2005179496 | A | 07-07-2005 |
| | | | KR | 20050062451 | A | 23-06-2005 |
| | | | US | 2005136251 | A1 | 23-06-2005 |
| | | | US | 2008008831 | A1 | 10-01-2008 |
| US 2011136322 | A1 | 09-06-2011 | JP | 2011119548 | A | 16-06-2011 |
| | | | KR | 20110063359 | A | 10-06-2011 |
| | | | US | 2011136322 | A1 | 09-06-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238915 A
- JP 2003342542 A
- JP 2004231723 A

- JP 2002069411 A
- JP 2009079203 A
- JP 2011099841 A